# EUROPEAN PATENT APPLICATION

(11) **EP 3 150 091 A1**
(43) Date of publication of application: **05.04.2017**
(21) Application number: 16189996.8
(22) Date of filing: 21.09.2016
(51) Int. Cl.: A47J 31/46, A47J 31/54

(54) **COFFEE MAKER WATER HEATER**

(30) Priority: 23.09.2015 US 201514862691
(71) Applicant: The Richards Corporation, Sterling, VA 20166 (US)
(72) Inventor: Jimenez, Marcos, Charles Town, WV West Virginia 25414 (US)
(74) Representative: Phillips & Leigh

(57) **Abstract**

Embodiments of the present invention provide improved heating methods for use in coffee makers and other beverage makers that use hot water for various beverages and other purposes. These improvements find particular use on-board aircraft or other passenger transport vehicles, where quick heating and reduced power consumption are particularly desirable and beneficial. Further embodiments also relate to improved water level sensing, improved water reservoirs, and improved carafe features.

## Description

### CROSS REFERENCE TO RELATED APPLICATIONS

This application is a continuation-in-part of U.S. Serial No. 14/023,891, filed September 11, 2013, titled "Coffee Maker Water Heater," which claims the benefit of U.S. Provisional Application Serial No. 61/699,533, filed September 11, 2012, titled "Coffee Maker Water Heater," the entire contents of which are hereby incorporated by reference.

### FIELD OF THE INVENTION

Embodiments of the present invention relate generally to improvements for coffee maker heating and find particular use on-board aircraft or other passenger transport vehicles, where quick heating and reduced power consumption are desirable. Embodiments also relate to improved water level sensing, improved water reservoirs, improved carafe features, and improved valve features.

### BACKGROUND

Traditional coffee makers either use immersion heating or flow-through heating systems for heating water. For immersion heating in a hot water tank (which may use a pressurized or a non-pressurized tank), water is heated within the tank and then held at the desired temperature until dispensed. Flow-through heating systems generally use a direct heater immersion or heat exchanger in the water path. Sometimes called "demand" or "instant" heating systems, these systems heat water instantly from ambient temperature up to the desired dispensing temperature upon request. Flow-through heating systems are generally desirable for most modern water heating equipment, particularly aircraft equipment, primarily due to weight savings compared with hot water tank systems. The efficiency and compactness of flow-through systems can be advantageous, and these systems also eliminate heat-up and recovery time.

However, one major disadvantage with traditional flow-through systems is that the power required to effectively heat from ambient up to a desired dispensing temperature (usually near boiling) with adequate dispense flow rates limits the use of these systems to either slow running equipment or to installations that require a high electrical load capacity. The electrical current required to operate flow-through heating systems is typically very high because the systems rely on heating the water with only a single pass through the heater.

However, reducing power consumption for aircraft equipment (as well as equipment for other passenger transport vehicles) is a desirable goal in the equipment manufacturing business. For example, more and more airlines are seeking to reduce their on-board power consumption in order to be more fuel efficient, cost-effective, and more environmentally friendly, as well as to provide more power to the consumer in-flight entertainment systems that are increasingly used on-board aircraft. One item of equipment that can be improved to pull less power is the coffee maker/hot water heater systems.

Another problem with some on-board coffee makers is that they can be difficult to clean, particularly the water reservoir area. The present inventors have thus determined ways to design the water reservoir as a removable component that can be cleaned and replaced back into the coffee maker/hot water heater unit.

### BRIEF SUMMARY

Embodiments of the present invention thus provide improved heating methods for use in coffee makers and other beverage makers that use hot water for various beverages and other purposes. These improvements find particular use on-board aircraft or other passenger transport vehicles, where quick heating and reduced power consumption are particularly desirable and beneficial. Further embodiments also relate to improved water level sensing, improved water reservoirs, and improved carafe features.

One example provides a water heating system for a coffee maker water heater, comprising: a water reservoir; an in-line flow-through heater assembly; a variable speed pump for moving water through a water flow path from the reservoir through the heater assembly and either (i) back to the reservoir or (ii) to a brew outlet or hot water outlet, wherein the variable speed pump is associated with software configured to control pump speed depending upon a brew set point temperature as correlated with actual water temperature flowing through the in-line flow-through heater assembly; a temperature sensor positioned in the water flow path; and a valve positioned in the water flow path for delivering water either (i) back to the reservoir or (ii) to the brew outlet or the hot water outlet. Theory dictates that the change in temperature of the water is proportional to the mass and the specific heat capacity of the water (the specific heat capacity of the water being a constant, i.e. 75.375 ± 0.05 J/mol·K (Wikipedia)). Since the mass of water is proportional to the flow rate of water through the heater assembly, by slowing the flow rate of water through the heater assembly has the effect of increasing the dwell time the water is in contact with the heater assembly and therefore, more heat is absorbed by the water resulting in a greater temperature rise in the water. Conversely, by increasing the flow rate of water through the heater assembly has the effect of reducing the dwell time the water is in contact with the heater assembly, and therefore, less heat is absorbed by the water resulting in a smaller temperature rise in the water. In use, water may be circulated from the water reservoir through the heater assembly and back to the reservoir in order to maintain water in the reservoir at a desired holding temperature. Water to be dispensed from the system may flow from the water reservoir, through the heater assembly, through the temperature sensor, and if the water is at the desired dispensing temperature, through the valve and either to the brew outlet or to the hot water outlet. There may be provided one or more valves for delivering water to the brew outlet or to the hot water outlet. The system may have a water fill system that allows filling of the water reservoir directly from a water source, such as a potable water tank on-board an aircraft. In other examples, there may be provided a water fill drawer that allows filling of the water reservoir from an external water source, such as bottled water.

In another example, there may be provided a water heating system for a coffee maker water heater, comprising: a housing for supporting a water reservoir; a flow-through heater; a variable speed pump for moving water from the water reservoir through the flow-through heater at variable water flow rates; and a controller for controlling speed of the variable speed pump, wherein the controller slows the water flow rate when water is to be quickly heated and speeds the water flow rate when water is approaching or at a desired brew set point. The variable speed pump may move from the water reservoir, through the flow-through heater, and either (i) back to the reservoir or (ii) to a brew outlet or a hot water outlet. It is possible to provide the reservoir with an overfill drain tube. It is also possible to provide the controller of the variable speed pump as being associated with software configured to control pump speed depending upon a brew set point temperature as correlated with actual water temperature flowing through the in-line flow-through heater assembly.

Another example provides a method for heating water on-board a vehicle, the method comprising providing a system one of the water heating systems described herein, filling the reservoir with water, causing water to circulate at varying speeds through the water heater via the variable speed pump and back to the reservoir, the varying speeds dependent upon a brew set point and actual water temperature, delivering a signal to the system that hot water is needed; and causing water to conduct a final pass through the heater assembly and to be delivered at the desired temperature.

### BRIEF DESCRIPTION OF THE DRAWINGS

FIG. 1 shows side schematic view of one embodiment of a coffee maker water heater that uses a flow-through water path recirculation system.
FIG. 2 shows a side schematic view of a coffee maker water heater that has a water fill system.
FIG. 3 shows a side schematic view of a coffee maker water heater that has a return line delivering water to a water intake opening.
FIG. 4 shows a schematic of an electrical rendering of the coffee maker water heater of FIGS. 2 and 3.
FIG. 5 shows a front perspective view of one embodiment of a coffee maker employing a coffee maker water heater and having a carafe with a liquid level viewing window.
FIG. 6 shows a side perspective view of a coffee maker water heater system.
FIG. 7 shows an exploded perspective view of a reservoir and its related components.
FIG. 8 shows a side perspective view of a water fill area on the reservoir.
FIG. 9 shows a side perspective view of one embodiment of how water may exit the reservoir.
FIG. 10 shows a side perspective view of one embodiment of a heater assembly.

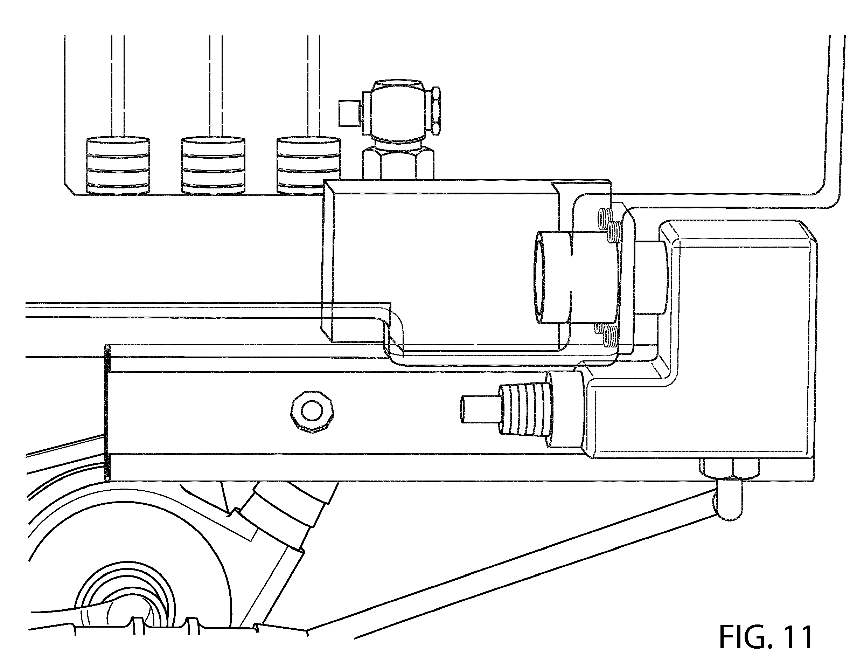

FIG. 11 shows a side perspective view of the reservoir in place in the unit housing, with the valves and sensors in place.

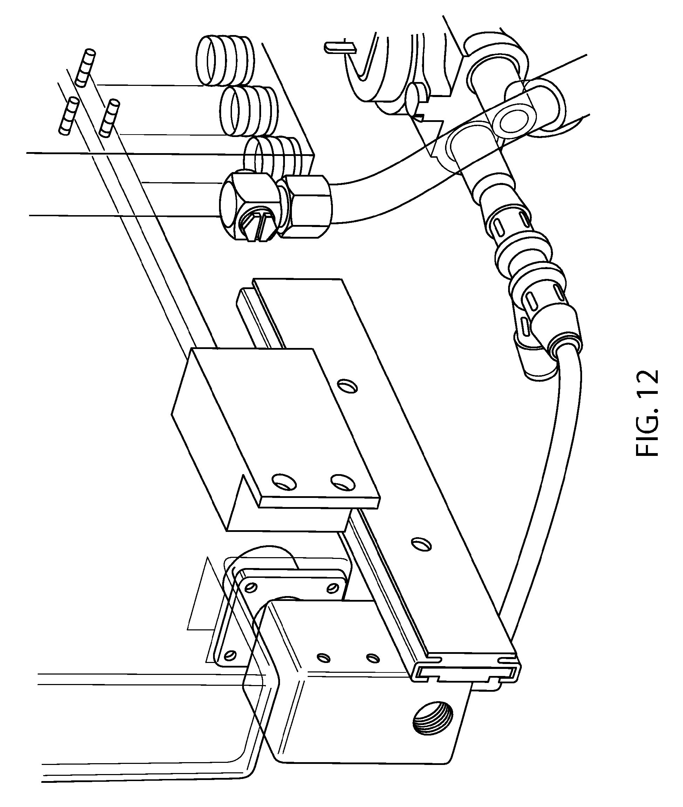

FIG. 12 shows a rear perspective view of the reservoir in place in the unit housing, showing one embodiment for connections of the conduit and a placement of the heater assembly.
FIG. 13 shows an exploded perspective view of one embodiment of a poppet valve.
FIG. 14 shows a top perspective view of various valves that control the flow of water through the system.
FIG. 15 shows a side schematic view of a coffee maker water heater that uses a flow-through water path recirculation system with a variable speed pump.
FIG. 16 shows a flowchart illustrating the logic sequence used to run a coffee maker water heater.

### DETAILED DESCRIPTION

Embodiments of this invention thus improve upon traditional flow-through systems by providing the advantages of flow-through heating (e.g., providing hot water upon demand), without the major disadvantage of requiring such a great power consumption and/or by requiring delivery via a slow flow rate. By recirculating water through a flow-through heater and holding that water within the reservoir at a holding temperature (which is generally, but need not always be, below the desired dispensing temperature), it is possible to almost instantly heat the water to near boiling temperature upon request. As the holding temperature nears the desired dispense temperature, there will be reduced benefits to energy loss to the environment as the temperature delta between reservoir and ambient are increased. However, a higher holding temperature may be required for systems that are auto-filling system for extended continuous dispensing with smaller reservoirs.

The systems described herein use significantly lower power requirements, but do not require a slow flow rate. This increases the possibilities for flow-through heating and allows for its use on installations with comparatively lower electrical capacities. For example, some smaller aircraft have lower power requirements and capabilities than larger commercials airliners. Additionally, larger airliners may find the systems described herein useful in order to lower the overall power consumption of the coffee maker/water heaters for any number of reasons, including those described above.

Systems described herein may also use a variable speed pump in order to control the flow rate of water through the heater. By varying the system flow rate, an inherent flexibility may be provided to the system. The unit is able to maintain a more constant water output temperature. The coffee maker can also compensate for variables such as reservoir water temperature.

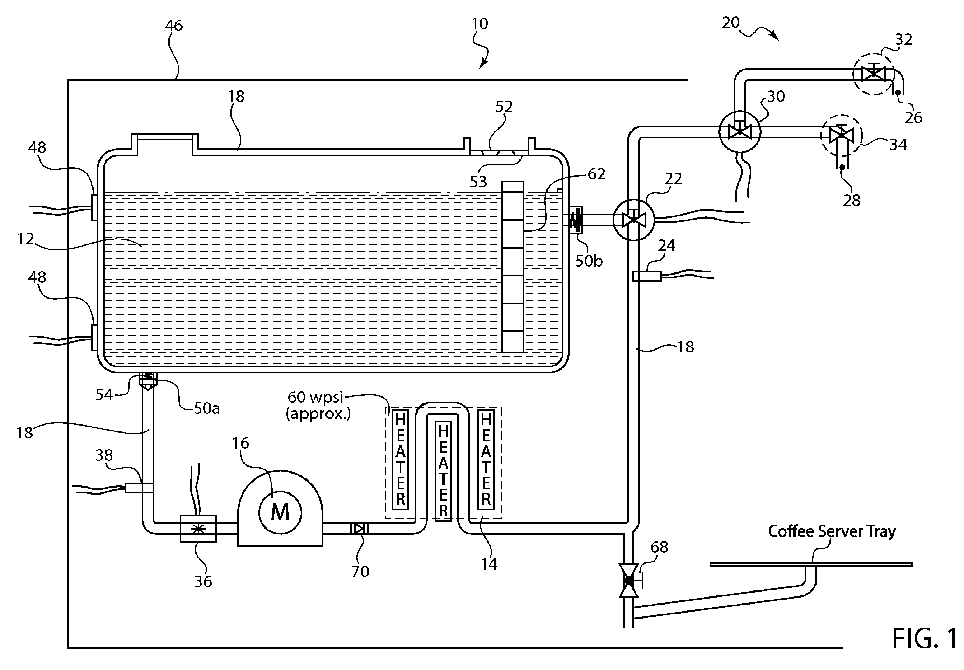

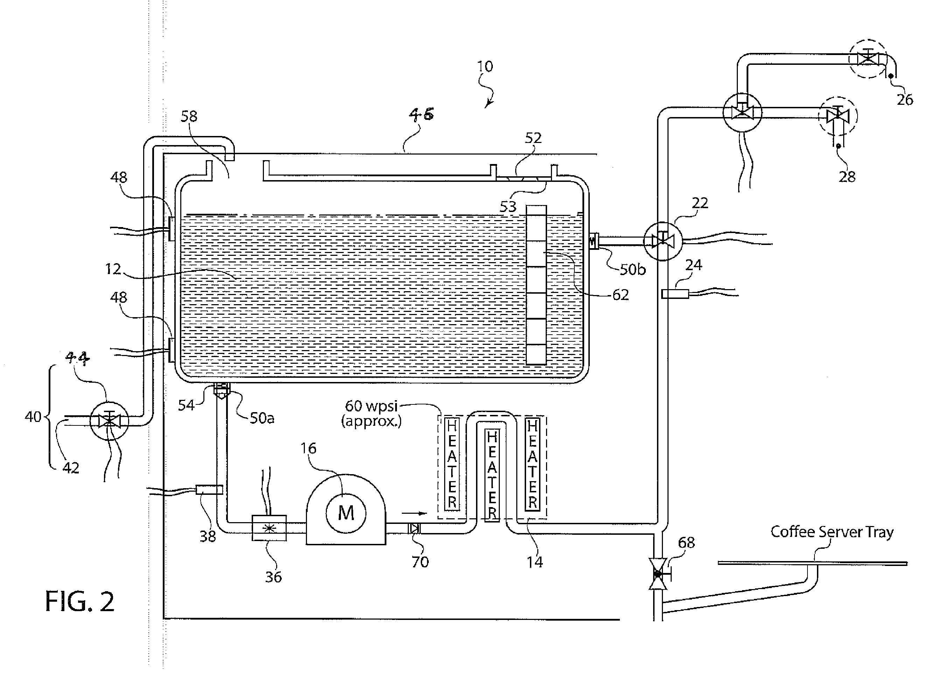

Figure 1 shows one embodiment of a water heating system 10. The system includes a reservoir 12 for holding the water to be heated, a flow-through heater assembly 14, and a pump 16 for moving the water through the system. The system is fluidly connected via various conduits 18, such as tubing or pipes, which may be any appropriate water flow conduit. The reservoir 12 is initially filled with cold or ambient water, either from the pressurized water system of the aircraft (or vehicle) or from a pre-packaged source, such as a bottled water, or water from a faucet or other source. The embodiment showing use with an external water source is illustrated in Figure 1. The embodiment showing use with water being delivered through the pressurized system of the aircraft (but which may also accept water from an external source) is illustrated in Figure 2.

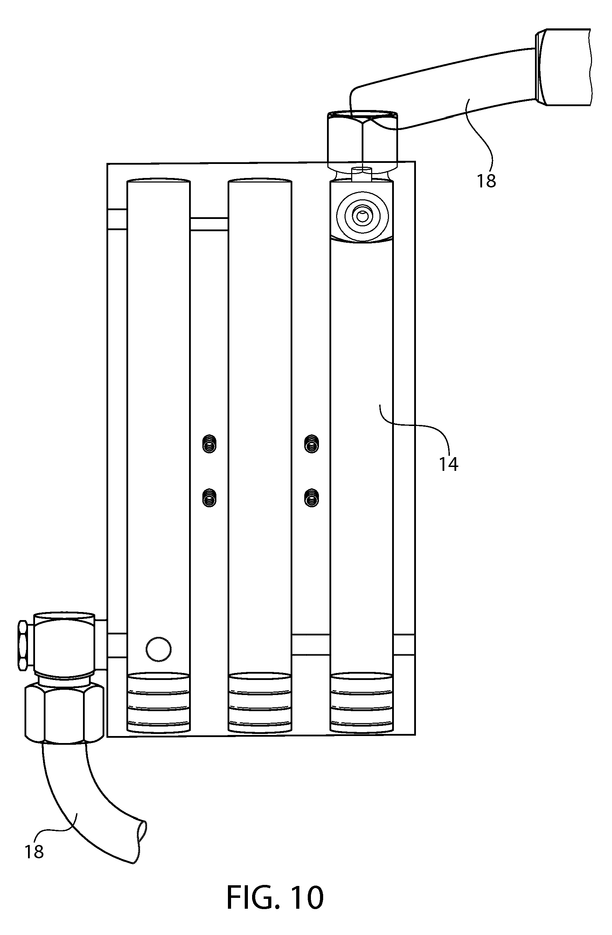

As shown in both figures, the reservoir 12 is fluidly connected to an in-line flow through heater assembly 14. The heater assembly 14 incrementally raises the temperature of the water as it passes through the heater assembly 14. The heater assembly 14 may be any typical flow-through heater assembly that is currently used for coffee maker water heaters (either for use on-board aircraft or for other uses). By incrementally heating the water in the reservoir 12, less instant power is needed to heat the water on its final pass through the system, immediately prior to its use. One example of a potential heater assembly is shown in Figure 10.

A pump 16 is also provided in order to circulate water from the reservoir 12 to the heater 14 and either back to the reservoir 12 or to the appropriate water delivery outlet. The pump may be any typical water pump that is currently used for moving water through aircraft lines or for any other water pump usage. In one embodiment, the pump 16 may be a variable speed pump. Use of a variable speed pump can help control the flow rate of water through the heater 14. By varying the system flow rate, an inherent amount of flexibility may be provided to the system. The unit is able to maintain a more constant water output temperature. The coffee maker can also compensate for variables such as reservoir water temperature.

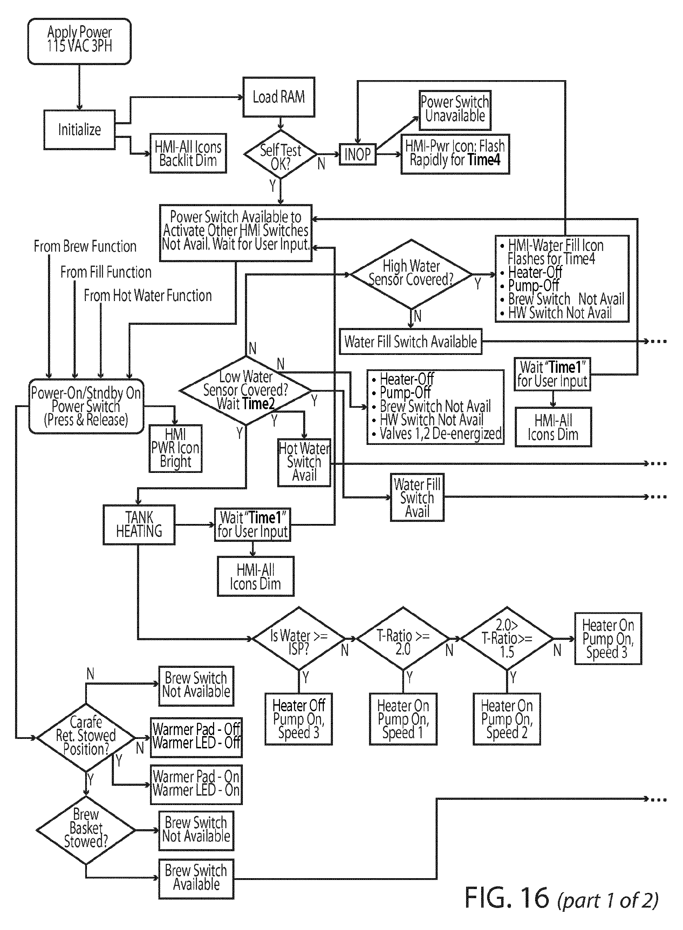

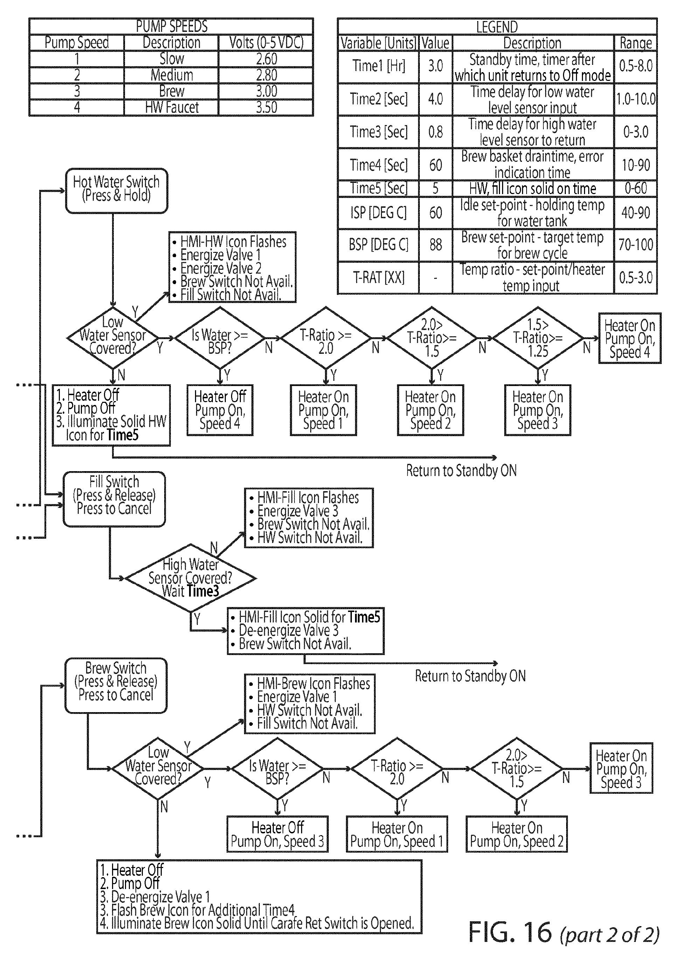

For example, if the reservoir 12 is filled with very cold water, the variable speed pump can be designated to operate at a slower speed (i.e. increasing the dwell time the water is in contact with the heater assembly), increasing the temperature of the water as it exits the heater 14 since more heat is absorbed by the water. A variable speed pump may also compensate for an older heater that may have degraded performance. Moving the water to be heated through the heater 14 more slowly can allow a greater temperature to be imparted to the water. The slower flow through the heater allows more time for the water to be heated. The flowchart of FIG. 16 illustrates equipment functionality and how the variable speed pump 16 can be altered, depending upon various parameters. The flowchart can provide a guide as to how the software used to control the system 10 can be programmed. As shown, the speed of the pump may be varied based on a temperature ratio calculation.

In general, during the warming period (i.e., when water is not needed for dispensing but when the reservoir has been filled to a desired level), the variable speed pump 16 routs the water through the conduit 18 to the heater assembly 14 and back to the reservoir 12. As the water circulates through the heating system, the water temperature in the reservoir rises. This allows the water to be heated to the desired final temperature faster upon the final pass-through the system, and with less power consumption required for that final pass. The temperature of the water in the reservoir is raised (due to the water circulation, water being heated and returned to the reservoir) until the desired holding temperature is reached. The desired holding temperature is generally lower than the boiling temperature desired for the water, and may be any desired temperature, for example, in the range of about 130-170°F (54-77°C) and more specifically, in the range of about 140-160°F (60-71°C), although the temperature of the holding water may be as high as the ultimate use temperature. In one embodiment, the water is held in the range of about 150°F (66°C) (which may fluctuate as the number of passes increases or stabilizes), and is then passed through the heater for a final dispense temperature of about 187-198°F (86-92°C), although the final dispense temperature may be about 200°F (93°C) if the system is set for uses requiring such higher temperatures. The general goal is to save power by keeping the water at a raised temperature, but not as high of the temperature that is desired upon use. By holding the water slightly below the final use temperature but maintaining it at a warmed level, the water is hot enough that it can achieve the desired temperature rise with one final pass through the heater, but requiring a lower power level than required by traditional flow-through systems and without lowering the desired dispensing flow rate.

The use of a variable speed pump 16 can provide enhanced temperature control of the water. For example, as shown in FIG. 16, when the system is powered on, if water is present in the reservoir 12 (as indicated when the low water sensor is covered) that is at or above the brew set point ("BSP"), the pump may turn on at high speed (e.g., in the schematic, this is shown as speed 4) without the heater turning on. This quickly moves/circulates water through the system at a high pace because the water does not need to be heated further. Additionally, if the heater is heated too quickly, the pump may also move water through the pump at a faster rate in order to cool the heater. However, if water is present in the reservoir that is below the brew set point (BSP), the system may use a temperature ratio calculation to determine at what speed the variable speed pump 16 should run water through the heater 14.

In one example illustrated by FIG. 16, the T-ratio may be defined as the temperature set-point divided by the heater temperature. As the actual heater temperature reaches the set point temperature, the speed of the pump may be increased to reduce the dwell time the water is in contact with the heater assembly and therefore, less heat is absorbed by the water. This can allow the water temperature to remain near constant as it exits the heater and is not necessarily dependent upon the reservoir holding temperature. The trade-off of this example is that if the reservoir holding temperature is relatively cold, the flow rate out of the heater will be lower (slower) than if the holding temperature is warm. This also allows the user of the beverage maker machine to pull very hot water almost instantly after filling the unit with cold water. No heat up time is required to deliver very hot water from the machine.

However, the specific values shown are exemplary only and provide only one example of a starting point for the software development. It should be understood that this is only one of many ways to control the pump speed. It is also possible to provide coffee makers with more (or fewer) speeds and with different values. The general goal is the functionality of being able to vary speeds based on different parameters. Again, it should be understood that there are other methods and formulas that may be used to control the variable speed pump with a full spectrum of speeds.

As an initial matter, when the water is very cold, the variable speed pump 16 will operate at a slow speed (e.g., in the schematic, this is shown as speed 1). Use of a generally slow speed causes the water to move through the flow-through heater 14 slowly, allowing the water to absorb more heat. Although this slow speed heats only a small amount of water, it can do so quite quickly, providing almost immediate hot water for use.

As the water temperature rises and/or gets closer to boiling temperatures, the variable speed pump can be caused to quicken. In the schematic, this is a shown as speeds 2 and 3. (Although four speed options are shown, it should be understood that the variable speed pump may be provided with any number of speed options. For example, only a high or low speed may be provided. In another example, a larger plurality of speed options may be provided, such as up to five, six, ten, or even more speeds.) As the water reaches the desired boiling temperature, the variable speed pump may continue to run with or without the heater being activated. For example, if the water is at or close to the desired dispense temperature, the pump may be allowed to run consistently with the heater element turned off. There may be provided a water level sensor 48 (described in more detail below) that detects when a minimum level of water is present. Assuming that the minimum level is present, the variable speed pump 16 may continuously run water. If the minimum level is not present, it is possible for a controller to deactivate the pump.

Software may define speed thresholds for the pump. A general goal may be to keep the set point of water temperature controlled by the speed at which the water is allowed to flow through the heater. The set point may be changed based on cabin altitude or pressure. Because water boils at different temperatures depending upon the air pressure/cabin altitude, the brew set point (BSP) may be changed during flight. (Examples of systems for monitoring and changing brew set points based on cabin altitude are described in co-owned U.S. Publication No. 2011/0067575 and U.S. Publication No. 2015/0150411.) It should be understood that the variable speed pump described herein may be configured to cooperate with any appropriate system designed to adjust the boiling point of the water based on an altitude range of the aircraft. The ability to vary the speed of the pump can help reduce power consumption, can help manage the more immediate availability of hot water, and can help manage heat/steam levels created by the system.

A pump controller may control the speed at which the variable speed pump operates. As the temperature of the water increases, the controller may cause the variable speed pump to speed up. Raising the speed of the pump may also help prevent flash boiling of water inside the heater. It is generally desirable to have the option of leaving the heater 14 on as long as possible without causing the heater to overheat. Providing a variable speed pump 16 can allow the system to increase water flow rate through the heater without causing overheating. At the same point, the variable speed pump can also allow the system to slow the water flow rate through the heater 14 when enhanced heating is required. The water flowing through the heater at a slower rate can absorb more heat energy provided. However, the water can only absorb the heat until it reaches its boiling/brew set point. If water is at this temperature, but a water request is not received from the hot water outlet or brew system, the water may be recirculated back into the reservoir 12. By providing this heated water back into the reservoir, less and less heat energy is required to heat the water flowing through the flow-through heater back up to the desired temperature. When a brew function is requested and the water flowing through the flow-through heater 14 should be raised to the brew set point, the variable speed pump may move to a slower speed in order to cause the water to be heated to be desired temperature.

In one embodiment, the system 10 is able to hold the water at the desired holding temperature and then heat the water to the desired dispensing temperature by using about 1300 watts, but the system may be designed to use as few as 500 watts if desired. (As a general matter, the lower the power provided, the lesser the temperature rise per pass of water that can be achieved. Lower power may also increase reservoir heat-up time. Higher power is also possible, however there are reduced benefits to use of the recirculating system once power is increased, depending on the flow rates desired.)

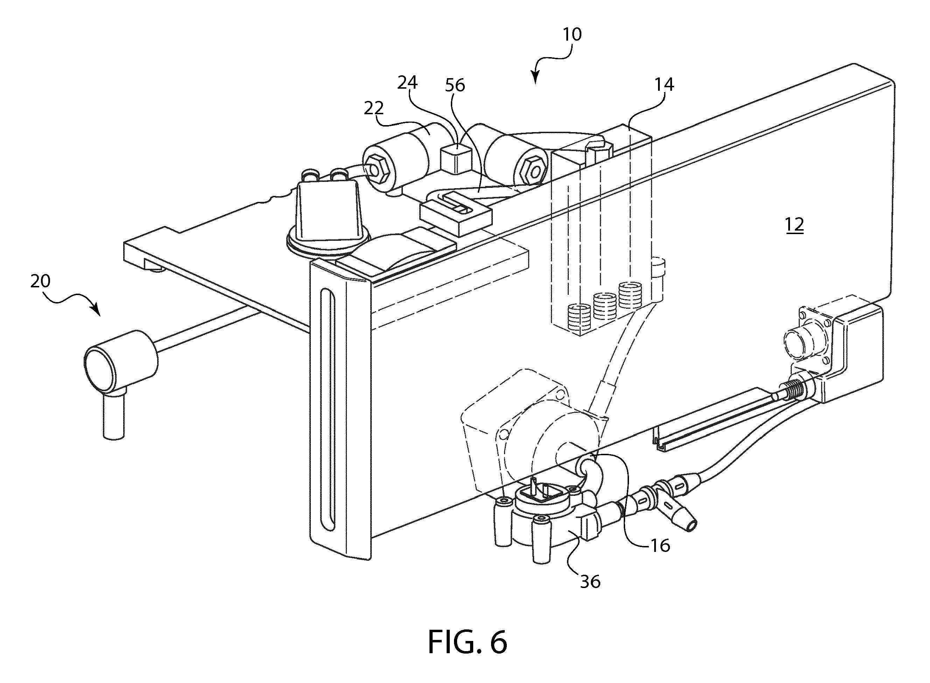

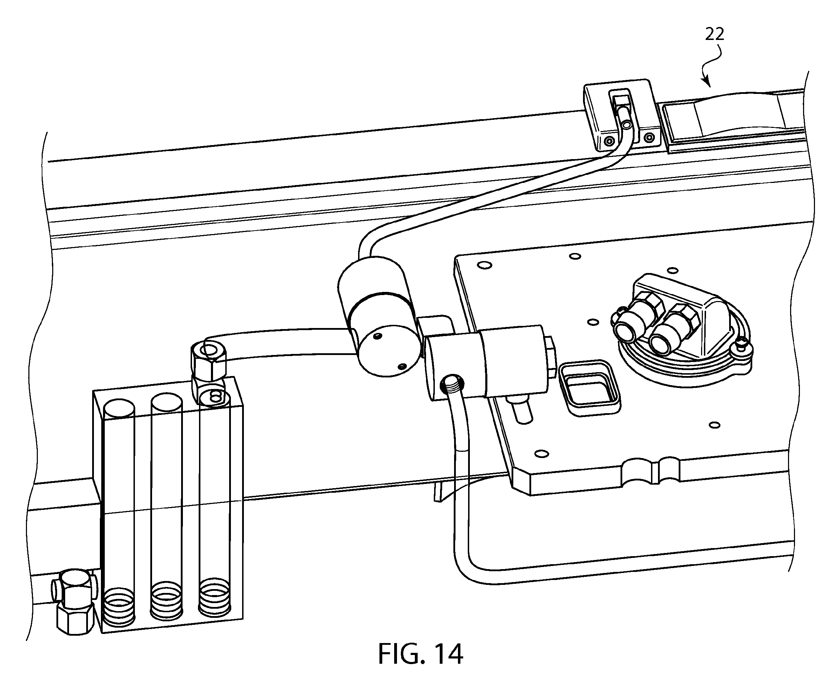

Figure 6 shows one embodiment of a coffee maker water heating system 10. When a user initiates a signal that hot water is desired (e.g., when the coffee maker is activated to brew coffee or when the hot water outlet is activated to dispense hot water for a cut of tea, for example), the variable speed pump 16 delivers water through the same heating assembly 14 for a final heating step to bring the water to a raised temperature. This time, however, rather than delivering the water back to the reservoir 12, the system delivers the water to a dispensing conduit area 20. Dispensing conduit area 20 is governed by a valve 22. Valve 22 may be a three-way valve or it may be a series of one or more valves. In use, the valve(s) 22 may be closed to prevent flow of water past the valve, opened to direct water into the reservoir loop, or opened to direct water to one of the desired outlets. The valve 22 may be controlled by an automatic controller that indicates how water should be directed. One example of a potential valve system is illustrated in Figure 14. The controller may have the reservoir option set as the default and cause the valve to switch upon an indication that hot water is needed. When the controller is in the "stand-by" mode, it monitors and maintains temperature in the reservoir and circulates the water through the heater assembly 14 as necessary to accomplish the desired temperature. There are many optional ways that the controller can be programmed, two examples of which are: the pump may be left running and the heater is only turned on/off as needed to maintain the temperature, or the pump may be in a default "off" position and only run when the heater is on. One benefit to leaving the pump running is that more accurate temperature measurements can be made and the control system can be simplified (although a continuously running pump does add to the power consumption of the system, as well as wear on the pump component). More detailed controller logic may be written and developed if desired.

Immediately preceding the valve 22 in the water flow path may be a temperature sensor 24 (i.e. the temperature sensor is positioned in the water flow path after the heater assembly 14). This temperature sensor 24 may be provided in order to detect a temperature so that a controller can confirm that the water is at the desired temperature prior to being dispensed. It may be related to the valve 22 such that if the water is not at the set temperature, even if the water dispense request has been activated, the water may be re-routed to flow through the water flow loop (i.e. back into the reservoir), rather than dispensed. This may happen when the heater assembly 14 is heating up, which may take a few seconds, and the goal is to prevent water from being dispensed until it is the proper temperature. Once the temperature sensor 24 detects that water is of the desired temperature, a controller can cause the three-way valve 22 to open and allow the water to pass to the dispensing conduit area 20.

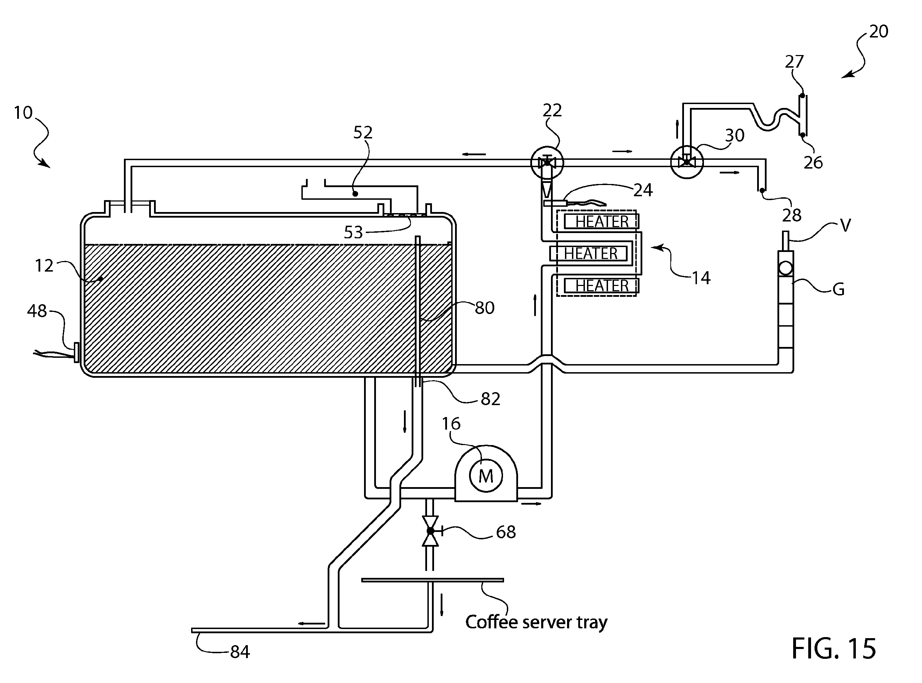

Referring now to Figures 1-3 and 15, the dispensing conduit area 20 is shown as having two dispensing outlets, although more or fewer outlets may be provided. (Figure 6 illustrates a single outlet.) In one embodiment, there is a hot water outlet 26 and a brew outlet 28. The hot water outlet 26 may be used to dispense hot water for tea, hot cocoa, or for any other use that requires hot/warmed water. As shown in FIG. 15, the hot water outlet 26 may have a hot water outlet vent 27. The brew outlet 28 may be connected to a beverage maker in order to deliver hot water for brewing coffee, espresso, or any other brewed beverage. The outlets may be governed by one or more valves that allow the dispensing of hot water as desired. The valves may be automatic or manual valves.

In a first embodiment, the joint at which the water would split between the outlets is governed by a valve 30. Valve 30 may be a three-way valve. It is also possible to provide valve 30 as one or more two-way valves. The valve(s) 30 either closes the dispensing conduit area 20 to delivery of water (while the water is being warmed through the loop system or when the system is not in use), causes water to flow toward the hot water outlet 26, or causes water to flow toward the brew head outlet 28. In an alternate embodiment, the individual outlets may be governed by their own 2-way valve. For example, in the alternate option shown, the hot water outlet 26 may have a 2-way valve 32 that either causes no flow of water or allows water to flow out the outlet when the water request has been made. The brew head water outlet 28 may have a 2-way valve 34 that either causes no flow of water or allows water to flow out the outlet and to the beverage maker when the water request has been made. (Although both options are shown on the figures, it should be understood that only a single 3-way valve 30 or two separate end valves (26, 28) need be used.)

Once the desired amount of water has been dispensed, the reservoir 12 maybe automatically replenished via the aircraft potable water system or manually replenished using pre-packaged water or water from a faucet. The embodiment shown in Figure 2 illustrates a system 10 that is filled via the pressurized tank of the aircraft via a water fill system 40. Water fill system 40 may feature a water pipe 42 that directs water from an external water source, such as a potable water tank on-board an aircraft or train or other vehicle, to the reservoir 12. The water inflow can be directed by a water inlet valve 44, which is activated when the water level in the reservoir is low and needs to be filled. Water sensors are generally provided that can detect water levels and indicate when a fill step should be activated. (Certain embodiments of water sensors for use in connection with the removable tank option are described below, but any type of appropriate sensor may be used, particularly if the removable tank option is not incorporated into the water flow aspects of the invention.)

The embodiment shown in Figures 1 and 15 illustrates a system 10 that may be filled via a water fill access port 52. In one example, the water fill access port 52 may be a water fill drawer, similar to that shown and described in co-owned U.S. Patent No. 9,049,959.

The system 10 may also feature an optional flow meter 36, which measures water flow through the heating system. This information is used as an input in the system controller so that the selected amount of hot water is delivered, as well as for equipment diagnostics (e.g., to test pump failure, detect system clogs, and so forth). Additionally, a second temperature sensor 38 may be provided in the flow path of the water. This sensor 38 may be provided in a location so as to measure the temperature of the water as it leaves the reservoir 12, which can indicate to the system how much the water is being heated after its pass through the heater assembly 14, can indicate to the system when the water in the reservoir is in the desired range so that the pump can stop circulating water through the system, or for any other number of functions. For example, there will be some heat loss as the water flows through the system, so the temperature sensor 38 can help detect how much heat is being lost per unit time.

Another feature of the hot water heater system 10 is that the water reservoir 12 may be designed to be removable from the unit to allow the reservoir 12 to be cleaned and/or replaced if necessary. Previous water heating/coffee maker designs have used an unmovable, fixed mounted tank. A fixed tank has the disadvantage that the unit must be completely disassembled for cleaning and maintenance of the tank. The removable reservoir embodiment of this invention improves the sanitation and reliability of the equipment by making the reservoir removable and accessible for cleaning, maintenance, and filling directly. The removable reservoir is an optional feature that may be provided with the water heating system 10 described above, or a removable tank may be provided with a traditional immersion or flow-through heating system.

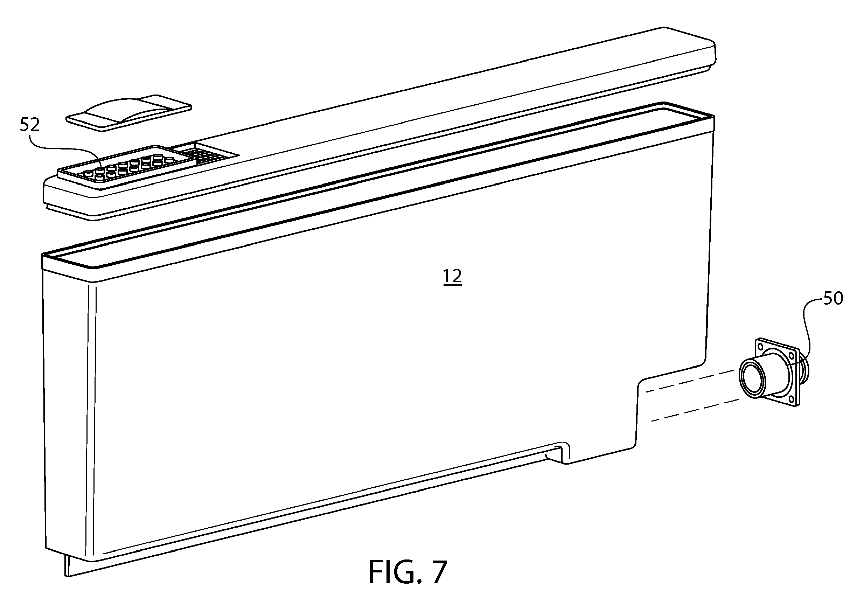

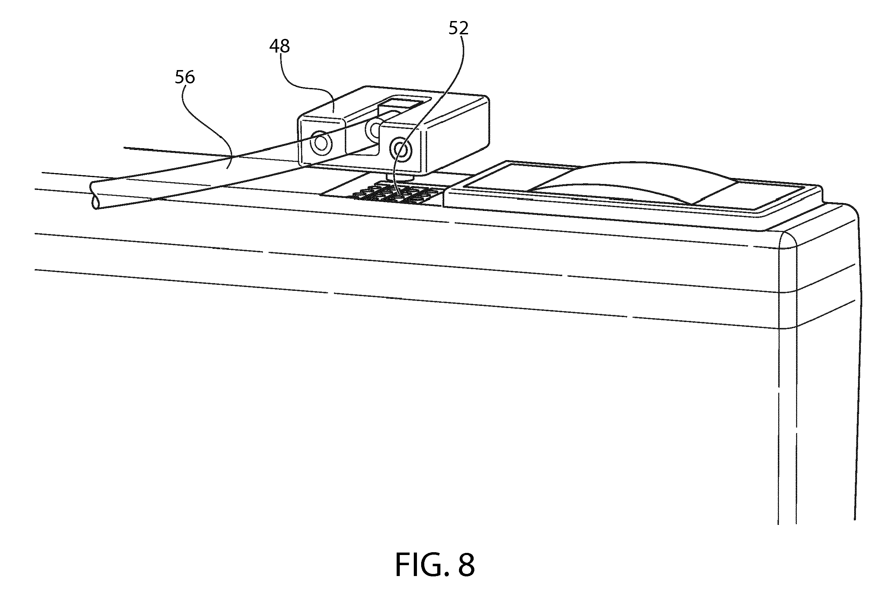

The removable reservoir embodiment generally provides a reservoir 12 that is insertable and removable from an outer housing 46. One example of such a reservoir 12 is shown in Figures 7 and 8. In order to create such a removable reservoir 12, it is first necessary to provide the water level sensors 48 that are external to the reservoir 12. Traditional water heating/ coffee maker designs use in-tank contact sensors or float systems to detect low and high water levels. These submerged contact level sensors have the disadvantage that they create the need for an electrical or mechanical connection to the tank. The sensors 48 used in the current system are not in contact with the reservoir 12, but instead, liquid level sensing is conducted by the use of non-contact capacitive sensors 48 used to detect low water level. Sensors 48 are located outside the reservoir 12 with no electrical or mechanical connection to the tank, but they can sense the water levels in the reservoir in order to indicate when water should be added, when water is so low that the water flow process/heating should be stopped, or when the water is high enough that the pressurized water in flow should be stopped. The sensors may activate audible or visual alarms to indicate low water, if desired. The non-contact capacitive sensor(s) are also used to detect high water level. If high water level is detected, the aircraft potable water inlet valve 44 is inactivated (and an indication of a full water level maybe provided to the user, via an audible or visual indicia on the system face).

One example of such external, non-contact sensors may be capacitive level sensors, and exemplary sensors are manufactured by Gems™ Sensors and Controls. As shown in Figures 1-3, the sensors 48 are generally positioned with one being near the top of the reservoir and one being near the lower area of the reservoir 12, but the sensors 48 are associated with the housing 40 into which the reservoir is positioned, and not the reservoir 12 itself. They may be secured to the housing, but positioned so that they directly abut the reservoir when it is positioned. By not having sensors directly connected to the reservoir, there are fewer items to be disconnected and reconnected when the reservoir is moved.

The reservoir is also connected to water conduits 18 via one or more poppet valves 50. The one or more poppet valves 50 are positioned at conduit connection areas, such that water is allowed to flow between the reservoir 12 and the conduit 18 when the valve seat is open, but that stops the flow of water when the reservoir 12 is removed from the housing 46. These valves act much like the valves on a humidifier, which allows the humidifier water basin to be removed, preventing the flow of water out of the basin, so that the basin can be filled and replaced. When the basin is replaced, the poppet valve allows a water flow connection to be re-established. For manual filling, the reservoir 12 is either partially removed (e.g., it can be slid out) or completely removed for filling via an opening or water fill access port 52 in the top, and then returned to the unit for catering. Removal of the reservoir also serves for cleaning if needed. An optional debris screen 53 may be positioned at the access port 52 to prevent debris from entering the reservoir.

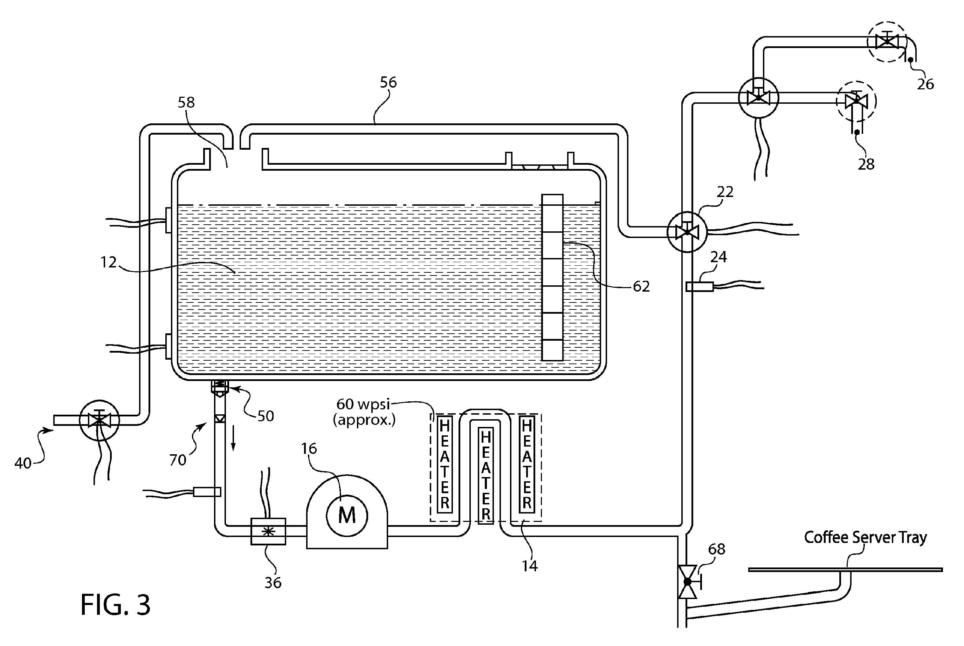

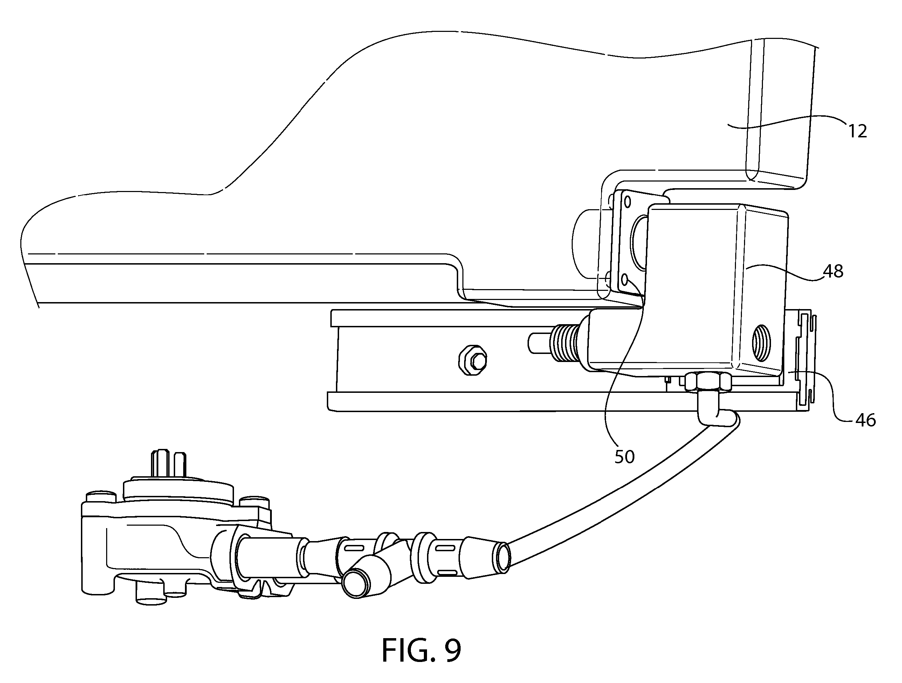

Figures 1 and 2 show a first poppet valve 50a at the water exit port 54, where the water exits the reservoir to enter the heating loop, and a second poppet valve 50b where the water reenters the reservoir. Figures 3 and 7-9 show an alternate embodiment in which the second poppet valve is not required because water reenters the reservoir 12 through a return line 56 that branches from the valve 22 and directs water into the reservoir at water intake opening 58. Figure 7 shows a potential location of a single poppet valve 50, and Figure 9 shows a poppet valve 50 connecting the reservoir 12 to a level sensor 48 that is associated with the unit housing 46. (However, the poppet valve 50 may be used to connect the reservoir directly to the unit housing 46, with the level sensor positioned alongside the reservoir once it has been positioned.) Figure 3 shows that water can be delivered from the water fill system 40 of the vehicle pressurized tank into the water intake opening 58 as well.

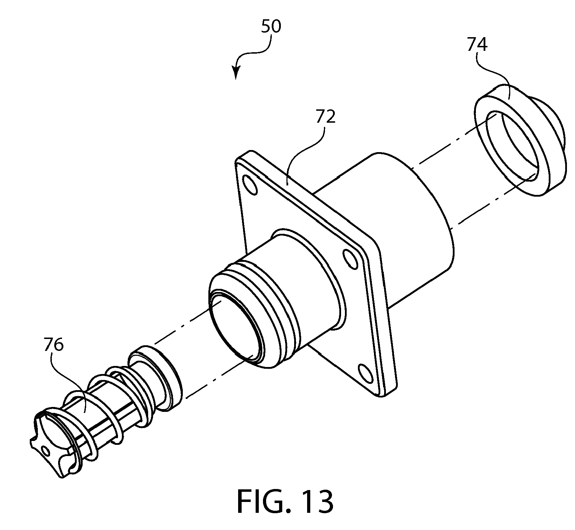

Figure 13 illustrates one particular embodiment of a specific poppet valve 50 that has been designed for a removable water reservoir 12. The valve 50 includes an abutment face 72, which interfaces with the reservoir and a replaceable filter 74 to prevent heating system contamination. Such a valve may also be useful on other systems that use poppet valves, such as similar reservoirs on humidifiers and other types of coffee makers that have removable reservoirs. An internal spring seat 76 helps ensure that water does not leak when the reservoir is removed.

The external surface of the reservoir may include a sight gauge 62 integrated into the reservoir 12 for the user to monitor water level. Alternatively, the reservoir may be clear so that easy viewing of the water level is available. The absence of any sensors or heaters within the reservoir, and the use of the external level sensors 48 and poppet valves 50 at the interface allow for easy removal of the reservoir 12. The design provides all level and temperature sensing positioned in the fluid path--outside the reservoir not within the reservoir.

The figures also show a manual drain 68, which can allow the conduits 18 to be completely drained, which is particularly important for systems on-board aircraft, which can be subject to freezing water in any of the system's lines.

The figures also show an optional check valve 70, which may be used to prevent hot water from flowing back into the pump 16 (as shown in Figures 1 and 2) or that could be used to prevent water from flowing back into the reservoir prior to passing through the heater assembly 14 (as shown in Figure 3).

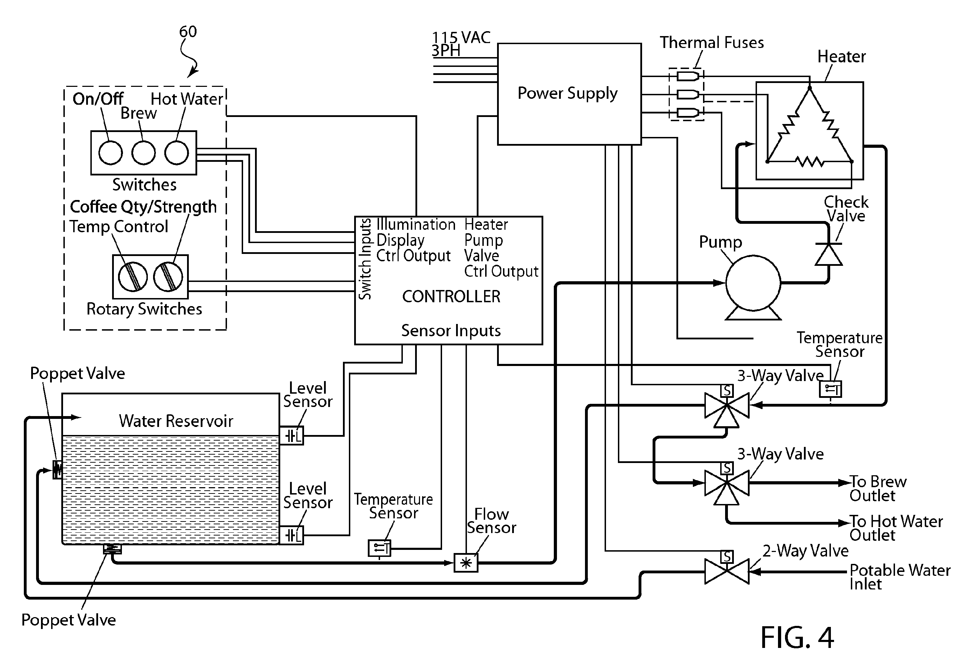

Figure 4 illustrates one example of the electrical schematic of the system 10. The user interface 60 may have a series of input options controlled by buttons, knobs, rotary switches, or any other appropriate interface. The commands are relayed to a controller that directs the power supply, various sensors and fuses, the pumps, and valves.

Figure 15 illustrates an optional overfill drain tube 80. This overfill drain tube can help ensure that the water reservoir 12 does not get over filled. Overfill drain tube 80 may be provided with an accompanying air vent 82, leading to rear drain 84. This may be particularly beneficial in an aircraft setting, wherein excess water delivered to the system can create a safety hazard due to spills. For example, if an attendant is not viewing the sight gauge and overfills the system if using an external fill drawer, that excess water can be removed via the overfill drain tube.

Another beneficial feature that may be incorporated into the system 10 is providing a carafe with a sight gauge G. It is also possible to provide a carafe site gauge vent V. Traditional airline coffee pots are made from stainless steel and do not include a sight gauge or water level viewing for the user. This has the disadvantage that the user does not know the quantity of beverage in the pot until s/he removes it from the equipment and looks inside from the top opening of the pot. This has contributed to spills and improper use of the equipment, such as preparing a pot of coffee before emptying the pot from the previous cycle. As shown in FIG. 15, it is possible to provide a clear sight gauge G on the body of the system 10.

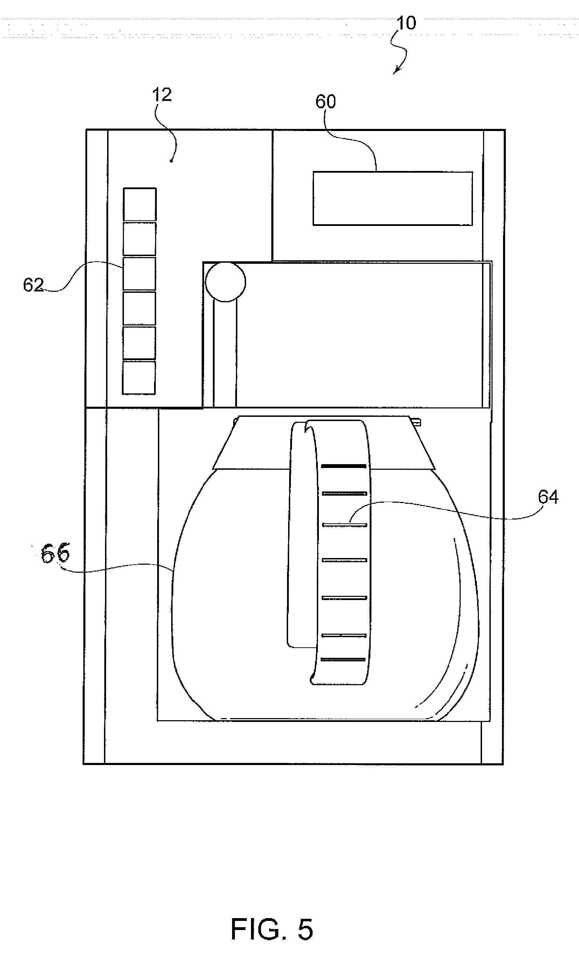

Additionally, as shown in FIG. 5, one embodiment of the present invention provides a liquid level viewing window 64 on the side of the stainless steel carafe 66.

Changes and modifications, additions and deletions may be made to the structures and methods recited above and shown in the drawings without departing from the scope or spirit of the invention and the following claims.
Further features of the present invention include:
1. A water heating system (10) for a coffee maker water heater, comprising:
   (a) a water reservoir (12);
   (b) a flow-through heater assembly (14);
   characterised in that the water heater system (10) further comprises:
   (c) a variable speed pump (16) for moving water from the water reservoir (12) through the flow-through heater (14) at variable water flow rates; and
   (d) a controller for controlling the speed of the variable speed pump (16), wherein the controller slows the water flow rate to achieve a larger temperature increase of the water and speeds the water flow rate to achieve a smaller temperature increase of the water.
2. The system of feature 1, wherein the flow-through heater assembly (14) is an in-line flow-through heater assembly.
3. The system of any of the preceding features, comprising a temperature sensor (24) in the water flow path.
4. The system of feature 3, wherein the temperature sensor is positioned in the water flow path after the heater assembly (14) .
5. The system of feature 3 or 4, wherein the controller is configured to control pump speed of the variable speed pump (16) depending upon a brew set point temperature as correlated with actual water temperature flowing through the flow-through heater assembly (14).
6. The system of feature 5, comprising a valve positioned (22) in the water flow path for delivering water either (i) back to the water reservoir (12) or (ii) to the brew outlet (28) or the hot water outlet (26).
7. The system of feature 6, wherein the valve (22) comprises a three-way valve.
8. The system of any of the features 3 to 7, wherein water is circulated from the water reservoir (12) through the heater assembly (14) and back to the water reservoir (12) in order to maintain water in the water reservoir (12) at a desired holding temperature .
9. The system of feature 8, wherein the desired holding temperature comprises the dispense temperature .
10. The system of any of the features 3 to 9, wherein variable speed pump (16) moves water from the water reservoir (12), through the flow-through heater (14), and either (i) back to the water reservoir (12) or (ii) to a brew outlet (28) or a hot water outlet (26).
11. The system of feature 10, wherein water to be dispensed from the system flows from the water reservoir (12), through the heater assembly (14), through the temperature sensor (24), and if the water is at the desired dispensing temperature, through the valve (22) and either to the brew outlet (28) or to the hot water outlet (26).
12. The system of feature 10 or 11, further comprising one or more valves (30) for delivering water to the brew outlet (28) or to the hot water outlet (26).
13. The system of feature 12, wherein each of the hot water outlet (26) and the brew outlet (28) comprises a dispensing valve (32, 34).
14. The system of the preceding features, further comprising a water fill system (40) that allows filling of the water reservoir (12) directly from a water source.
15. The system of feature 14, wherein the water source comprises a potable water tank .
16. The system of any of the preceding features, further comprising water fill access port (52) that allows filling of the water reservoir (12) from an external water source, wherein the water fill access port (52) comprises a water fill drawer.
17. The system of any of the preceding features, further comprising a carafe (66) that has a liquid level viewing window (64).
18. The system of any of the preceding features, wherein the water reservoir (12) is configured to be removable from a unit (46) that houses the water heating system (10).
19. The system of feature 18, further comprising one or more poppet valves (50) that connect the water reservoir (12) to water conduits (18) that deliver water through the system.
20. The system (10) of feature 18 or feature 19, further comprising at least one external water level sensor (48) positioned outside of the water reservoir (12) for detecting or measuring the level of water in the water reservoir (12).
21. The water heating system (10) of feature 20, wherein the at least one external water level sensor (48) is associated with the unit (46) into which the water reservoir (12) is positioned.
22. The water heating system (10) of any of the features 18 to 21, wherein the water reservoir (12) comprises a sight gauge (62).
23. The water heating system (10) of any of the features 18 to 22, wherein the water reservoir (12) comprises an overfill drain tube (80).
24. A method for heating water on-board a vehicle using a water heater system (10) of any of the features 1 to 23, the method comprising the step of varying the water flow rate through the flow-through heater assembly (14) to vary the temperature of the water.

## Claims

1. A water heating system (10) for a coffee maker water heater, comprising:
(a) a water reservoir (12);
(b) a flow-through heater assembly (14);
**characterised in that** the water heater system (10) further comprises:
(c) a variable speed pump (16) for moving water from the reservoir through the heater assembly (14) at variable water flow rates; and
(d) a controller for controlling the speed of the variable speed pump (16), wherein the controller slows the water flow rate to achieve a larger temperature increase of the water and speeds the water flow rate to achieve a smaller temperature increase of the water.

2. The system of claim 1, wherein the flow-through heater assembly is an in-line flow-through heater assembly.

3. The system of claim 1 or 2, comprising a temperature sensor (24) in the water flow path.

4. The system of claim 3, wherein the temperature sensor (24) is positioned in the water flow path after the heater assembly (18).

5. The system of claim 3 or 4, wherein the controller is configured to control pump speed of the variable speed pump (16) depending upon a brew set point temperature as correlated with actual water temperature flowing through the flow-through heater assembly (14).

6. The system of claim 5, comprising a valve positioned (22) in the water flow path for delivering water either (i) back to the water reservoir (12) or (ii) to the brew outlet (28) or the hot water outlet (26).

7. The system of claim 6, wherein the valve (22) is positioned in the water flow path after the temperature sensor (24).

8. The system of claim 6 or 7, wherein the valve (22) comprises a three-way valve.

9. The system of any of the claims 3 to 8, wherein water is circulated from the water reservoir (12) through the heater assembly (14) and back to the water reservoir (12) in order to maintain water in the water reservoir (12) at a desired holding temperature.

10. The system of claim 9, wherein the desired holding temperature comprises the dispense temperature.

11. The system of any of the claims 3 to 10, wherein variable speed pump (16) moves water from the water reservoir (12), through the flow-through heater (14), and either (i) back to the water reservoir (12) or (ii) to a brew outlet (28) or a hot water outlet (26).

12. The system of claim 11, wherein water to be dispensed from the system flows from the water reservoir (12), through the heater assembly (14), through the temperature sensor (24), and if the water is at the desired dispensing temperature, through the valve (22) and either to the brew outlet (28) or to the hot water outlet (26).

13. The system of claims 11 or 12, further comprising one or more valves (30) for delivering water to the brew outlet (28) or to the hot water outlet (26).

14. The system of claim 13, wherein each of the hot water outlet (26) and the brew outlet (28) comprises a dispensing valve (32, 34).

15. The system of any of the preceding claim, further comprising a water fill system that allows filling of the water reservoir (12) directly from a water source.

16. The system of claim 15, wherein the water source comprises a potable water tank on-board an aircraft.

17. The system of any of the preceding claims, further comprising a water fill access port (52) that allows filling of the water reservoir (12) from an external water source, wherein the water fill access port (52) comprises a water fill drawer.

18. The system of any of the preceding claims, wherein the reservoir (12) comprises an overfill drain tube (80).

19. A method for heating water on-board a vehicle using a water heater system (10) of any of the preceding claims, the method comprising the steps:
(a) filling the reservoir with water;
(b) causing water to circulate at varying speeds through the water heater via the variable speed pump and back to the reservoir, the varying speeds dependent upon a brew set point and actual water temperature;
(c) delivering a signal to the system that hot water is needed; and
(d) causing water to conduct a final pass through the heater assembly and to be delivered at the desired temperature.
